# EUROPEAN PATENT SPECIFICATION

(11) **EP 1 605 729 B1**
(45) Date of publication and mention of the grant of the patent: **18.07.2018**
(21) Application number: 05252357.8
(22) Date of filing: 15.04.2005
(51) Int. Cl.: H05B 3/86

(54) **Electrically heated window**
Elektrische beheizte Scheibe.
Vitrage chauffée électriquement.

(30) Priority: 15.04.2004 GB 0408392
(43) Date of publication of application: 14.12.2005
(73) Proprietor: Pilkington Group Limited, Lathom, Nr. Ormskirk, Lancashire L40 5UF (GB)
(72) Inventor: Chamberlain, Mark Andrew, St. Helens, WA11 0GD (GB); Dixon, Jonathan Barclay, Lancashire, WN8 7PD (GB); Greenall, Michael Robert, Preston, Lancashire, PR25 5RG (GB); Kriegel-Gemmecke, Matthias, 46485 Wesel (DE)
(74) Representative: Pettet, Nicholas Edward

(56) References cited:
- EP-A- 0 800 333
- EP-A2- 0 849 977
- GB-A- 2 372 927
- JP-A- 4 250 786

## Description

The present invention relates to an electrically heated window, and more particularly to a laminated window fitted with an imaging device which views an object to be imaged through a viewing area of the window. The invention finds particular application in windows for vehicles, e.g. where a camera is mounted on a windscreen to view the road ahead, or the surroundings of the vehicle.

As road safety bodies, government agencies, vehicle manufacturers and other interested parties strive to increase road safety, despite increasing congestion and the proliferation of potential distractions to drivers, one approach adopted is to provide technical aids to drivers to assist them to drive safely. For example, one such aid may monitor a vehicle's course relative to the road ahead, and alert the driver when deviations occur. Alternatively, it is possible to monitor the separation between one vehicle and the next, and alert the driver when the separation drops below a desired value. In more advanced systems, it is possible to arrange for the vehicle to take remedial action automatically. A further possibility is to provide assistance to the driver in conditions of poor visibility due to adverse weather or low light levels, e.g. in fog or at night. It is also desirable to assist the driver to manoeuvre the vehicle without incident by using cameras to augment the driver's vision in areas where it is difficult for the driver to see, e.g. immediately around the vehicle below the level of the windows, especially to the sides or rear of the vehicle.

All such systems rely on some type of imaging device, for example a camera, to view or monitor the vehicle's surroundings, be it the road itself, other vehicles, etc. It is self-evident that the functioning of such systems will be adversely affected if the image formed by the device is impaired in some way. Accordingly, one prerequisite is for the imaging device to have a clear view, free of condensation, frost, ice or snow on the window, regardless of weather conditions.

It is known from EP-A-788 294 to heat the whole of a vehicle windscreen electrically in order to improve vision through the windscreen for the driver. Such an arrangement requires a high level of power, and is particularly intended to clear the windscreen when the vehicle engine is first started up, e.g. early in the morning, and the vehicle's ventilation system is not yet able to supply warm air to clear the windscreen. Indeed, vehicle manufacturers normally include a time switch in the power circuit for such a windscreen, so that it is automatically switched off after a few minutes to reduce the demand on the vehicle's electrical
system, the intention being that the ventilation system maintains clear vision through the windscreen thereafter. Imaging devices are normally shielded from the vehicle interior, and are often located at the top of the windscreen, distant from the air outlets. Consequently, one cannot rely on a vehicle's ventilation system to maintain a clear view for an imaging device. EP 0 849 977 and GB 2 372 927 disclose heated vehicle windows according to the preamble of claims 1 and 2 respectively. US 5,804,817 relates to a rain sensor for detecting the degree of wetting of a window, especially a vehicle windscreen. The sensor relies on the attenuating effect of raindrops on radiation which follows a measurement path in the glass of a windscreen, undergoing several total internal reflections between the outer and inner surfaces of the glass. To avoid impairment of the measurement by condensation on the inner surface, a heating device is arranged on at least one contact surface between the sensor and the window. In the principal embodiment of the invention, this takes the form of a non-transparent heated plate held in contact with the glass; alternatively, a heating wire may be provided adjacent the measurement path, e.g. in the sensor base, in a seal or on the glass. However, the rain sensor is not an image-forming device, and does not view an object through the glass.

FR 2 841 488 discloses a detector, especially for mounting on the rear of a vehicle, to warn a driver of obstacles behind the vehicle when reversing. It contains a camera in a housing, the latter having a heated viewing window. Similarly, JP 11-291869 discloses a housing for a camera, the housing having a heated window and also containing a light sensor and a thermostatic switch. When the measured temperature falls below a set temperature, the switch energises a heating circuit to heat the window. While effective, these systems add cost and complexity to the vehicle because of the additional housing required to accommodate the camera.

It would be desirable to provide a viewing area in a pre-existing vehicle window, i.e. one that is routinely fitted to a vehicle, for example the windscreen or rear window, through which an imaging device may view an object, and which can be maintained clear throughout the period of operation of the device without excessive power consumption.

The present invention accordingly provides an electrically heated window characterised by an imaging device which views an object to be imaged through a viewing area of the window, the window being laminated from at least two plies of glazing material and at least one ply of interlayer material extending between the plies of glazing material, the window comprising a resistance heating element suitable for heating a localised area of the window including the viewing area and electrical connection means for connecting the heating element to an electrical supply, wherein the heating element is laminated between the plies of glazing material and is positioned adjacent the viewing area so as not to affect the image viewed. The window is in the passenger compartment of the vehicle, and is normally the windscreen or rear window.

Laminating the heating element inside the window provides a durable and efficient means of directly heating the viewing area, as the heating element is protected from damage, and heating losses that occur at the contact between the heating plate known from US 5,804,817 and the windscreen are eliminated. The heating element may be on a ply of glazing material, or on a ply of interlayer material, or embedded within a ply of interlayer material.

The invention also provides an electrically heated vehicle window characterised by an imaging device which views an object to be imaged through a viewing area of the window, the window comprising either a single sheet of glazing material or multiple sheets of glazing material laminated together, the window further comprising a resistance heating element suitable for heating a localised area of the window including the viewing area and electrical connection means for connecting the heating element to an electrical supply, wherein the heating element is printed in conductive ink on the surface of a sheet of glazing material and is positioned adjacent the viewing area so as not to affect the image viewed.

The viewing area is heated by heat conducted from the heating element. This arrangement takes advantage of the fact that a heating element inevitably heats the surrounding area by conduction, and so if the viewing area is compact, it can be satisfactorily heated in this way.

The invention also provides a window which is provided with a substantially opaque coating disposed on a face of at least one of the plies, and the substantially opaque coating extends over the edges of the heating element so as to obscure them from view. This provides an aesthetically preferable design. Preferably, the window is a vehicle windscreen having mirror symmetry about a centre line, and the viewing area is positioned on the centre line, near the upper edge of the windscreen. Such a windscreen may be provided with a mirror boss for mounting a rear view mirror, in which case, the viewing area may adjoin the mirror boss.

Desirably, the window is provided with a wiper, and the viewing area is within the area wiped by the wiper. This ensures that the viewing area is also kept clear of raindrops and the dirt which inevitably accumulates on windows, especially on vehicles.

In a particularly preferred embodiment of the invention, the window includes an additional electrical resistance on or in the window and connected in series with the heating element, the value of the additional electrical resistance being selected to be complementary to the resistance of the heating element, so that application of the supply voltage across the total resistance results in a desired level of power density in the heating element. As the heating element is normally quite small, there is only a short conductive path between the positive and negative electrical connection means to the heating element. Consequently the resistance of the heating element is generally low, and so the desired power density is dissipated by the heating element at a low voltage, often well below the normal supply voltage which is available, e.g. 12-14 V, and certainly below the 42 V value which will be used in future. It is therefore convenient to include an additional electrical resistance, within the circuit on the window, to balance that of the heating element, and allow the available supply voltage to be applied without further modification.

According to another aspect of the invention, there is provided a method of manufacturing the aforementioned electrically heated window, comprising providing the heating element and the electrical connection means at the appropriate position between the plies of glazing material, and laminating the plies of glazing material and the ply of interlayer material together to form a laminated window.

The invention will now be further described in terms of the following specific embodiments, which are given by way of illustration and not of limitation, and with reference to the accompanying drawings in which:-
Fig. 1 is a schematic view of a window according to the invention;
Fig. 2 is a section of part of the window of Fig. 1, taken along line II-II of Fig. 1;
Fig. 3 is a perspective view of an imaging device and rear view mirror, shown placed in an adjoining relationship such as is possible on the window of Fig. 1;
Fig. 4 shows a heating element according to a first embodiment of the invention;
Fig. 5 shows a heating element according to a second embodiment of the invention;
Fig. 6 shows a heating element according to a third embodiment of the invention;
Fig. 7 shows a heating element according to a fourth embodiment of the invention;
Fig. 8 is a schematic view of a window according to a preferred version of the invention;
Fig. 9 shows a heating element according to a fifth embodiment of the invention;
Fig. 10 is a schematic view of a window according to a sixth embodiment of the invention;
Fig. 11 is an enlargement of part of Fig. 10; and
Fig. 12 is also an enlargement of part of Fig. 10, with thermal contours added.

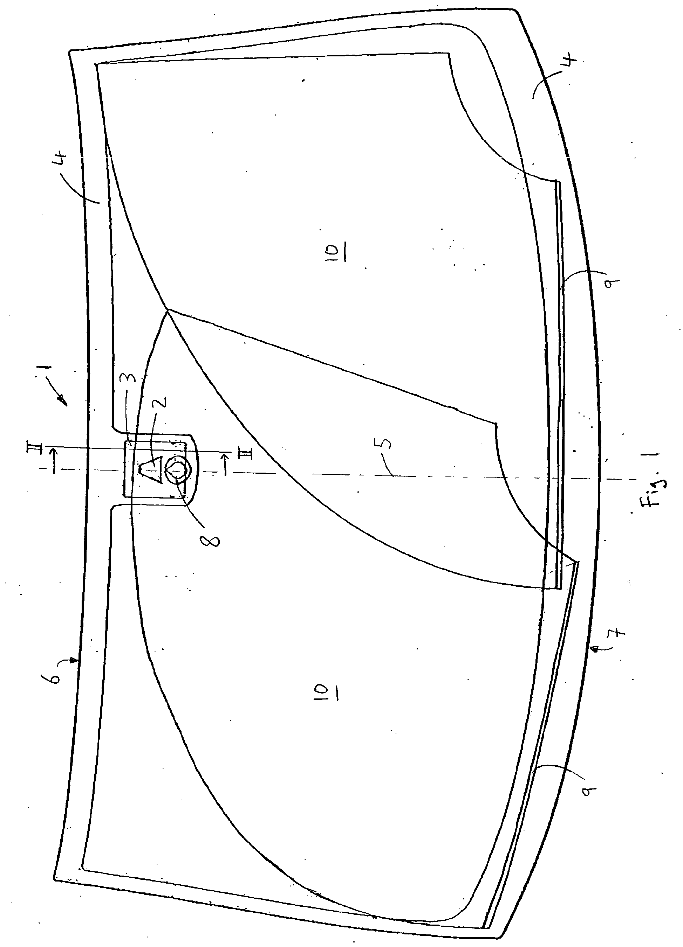

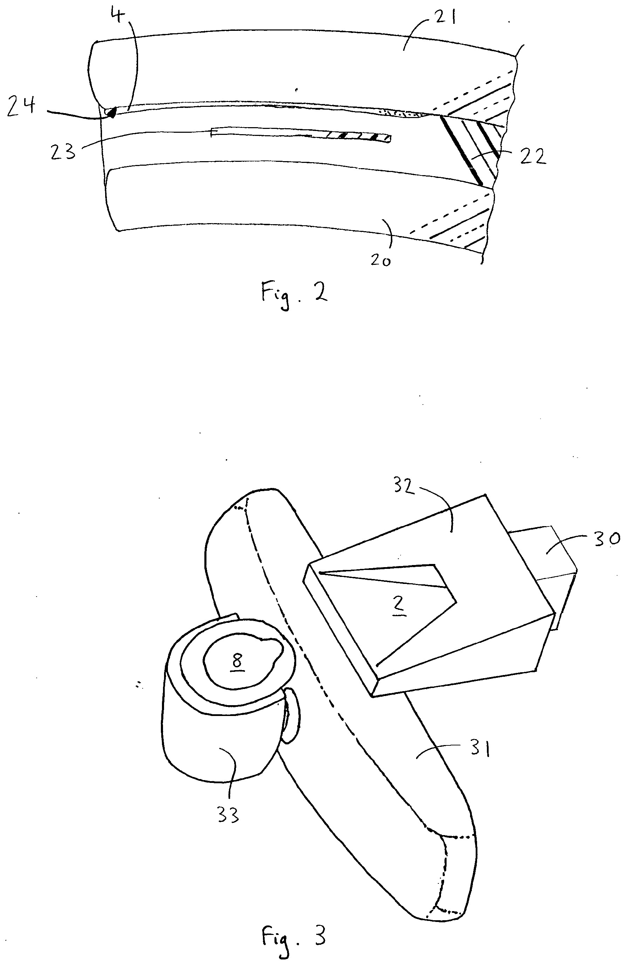

Referring to Fig. 1, there is shown a general view of an electrically heated window 1 intended to be fitted with an imaging device, and the particular window shown is a windscreen for a vehicle. The imaging device would be mounted on the face of the windscreen which in use faces into the vehicle, and this will be referred to as the interior face of the windscreen. The face of the windscreen which in use forms part of the exterior surface of the vehicle will correspondingly be referred to as the exterior face. The imaging device forms an image of objects viewed through the windscreen, and the area of the windscreen through which the device views such objects is denoted the viewing area 2. According to the invention, a localised area 3 of the windscreen, which includes viewing area 2, is heated by a heating element (Fig. 2) to keep it clear of condensation or ice, etc. The localised area 3 is small in comparison to the total area of the window, representing less than 10% of the area, and typically only 1 or 2% of the area.

The window is provided with a substantially opaque coating 4, which is typically black, and in this case extends around the whole periphery of the windscreen to hide the flange of the vehicle bodywork on which the windscreen is mounted, and protect the adhesive from the adverse effect of ultraviolet light. The coating 4, which is commonly referred to as an obscuration band, advantageously extends over the edges of the localised area 3 to obscure the edges of the heating element from view; but, needless to say, the obscuration band does not extend over the viewing area itself, an aperture or uncoated area being left over the viewing area. Normally, the obscuration band is printed using a ceramic ink which is fired during the same heating cycle as is used to bend the plies of glass to the required shape.

The windscreen has a centre line 5 extending in a vertical plane, from the upper edge 6 of the windscreen to the lower edge 7 (references to the orientation of the windscreen are to be understood as assuming the windscreen is in its installed orientation). The windscreen has mirror symmetry about the centre line, as do most vehicles to at least a first approximation, and it is advantageous from both technical and aesthetic perspectives if the viewing area 2 is positioned on, or at least near to, the centre line 5. Preferably the viewing area is positioned near the upper edge 6 of the windscreen in order to benefit from the improved view afforded by a more elevated viewing position.

Normally the windscreen is provided with an attachment area 8 for a mirror boss on which a rear view mirror is mounted. It is convenient to arrange the viewing area 2 to adjoin the attachment area 8 for the mirror boss. The windscreen is also provided with windscreen wipers 9, which wipe an area 10 of the windscreen. It is advantageous if the viewing area is within the wiped area, as the exterior face of the portion of the windscreen occupied by the viewing area is thereby kept clean.

Figure 2 is a section of part of the window of Figure 1, on the line II-II of Figure 1, and shows the laminated construction of the window. It comprises inner and outer plies of glazing material 20, 21, e.g. annealed glass, and a ply of interlayer material 22, e.g. polyvinylbutyral (PVB), which extends between the plies of glazing material. The obscuration band 4 is shown on the inner face 24 of the outer ply 21; alternatively, it could be provided on one of the faces of the inner ply 20. The heating element 23 is disposed between the plies of glazing material, and heats a localised area of the windscreen around it. The heating element may have a ply of interlayer on either or both sides of it, as will be explained in more detail below. Similarly, the various forms the heating element may take are explained in more detail below. It will be appreciated that the obscuration band 4 conceals the heating element 23 from external view; indeed, owing to the deep shadow cast by the obscuration band, the heating element will be barely detectable when viewed from the inside of the vehicle.

Figure 3 is a perspective view of an imaging device 30 and a rear view mirror 31, as they might coexist on a windscreen. Typically the imaging device is a form of camera, which may be used to view the surroundings of the vehicle, for instance the road on which the vehicle is travelling. In one application it is used to monitor the road ahead of the vehicle, e.g. the camera is aligned to view a line or other marking dividing two lanes or carriageways. The camera image is processed by appropriate image analysis software running on an onboard computer, which alerts the driver if the vehicle strays from the lane or carriageway it is following, e.g. due to driver fatigue or a distraction, a so-called "lane departure warning" system. In a more advanced application, it may be possible for the computer to initiate appropriate corrective action.

The camera is mounted on a viewing bracket 32, which is attached to the windscreen and defines the viewing area 2. Figure 3 also shows the mirror boss attachment area 8, and the mirror boss 33 itself; it is convenient to mount the camera in the vicinity of the mirror boss 33, especially just above it, as this area of the windscreen is not used for vision by the driver, and it provides an elevated view for the camera 30.

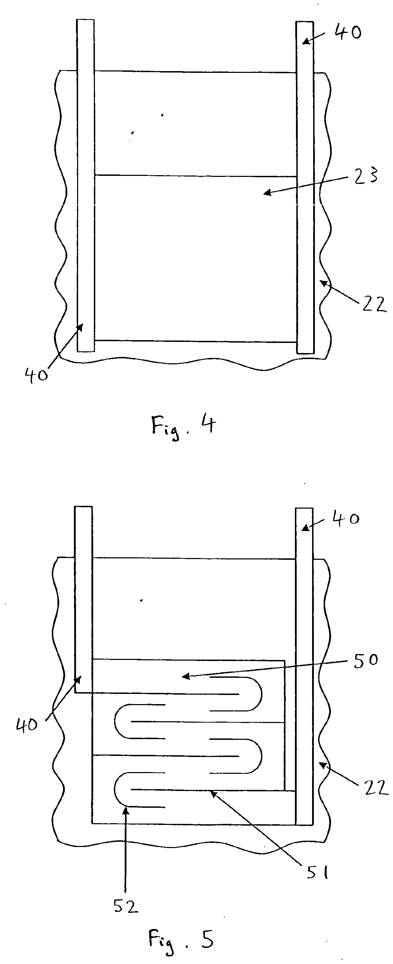

Figure 4 shows a resistance heating element according to a first embodiment of the invention. In this embodiment, the heating element 23 comprises a carrier foil to which an electrically conductive thin film has been applied. The thin film may comprise one or more silver layers, or a conductive metal oxide, and the carrier film may be polyethylene terephthalate (PET) having a thickness in the range 40 to 100 µm. A preferred product of this type, having double silver layers, is designated XIR 75 ® and is available from Southwall Technologies Inc of Palo Alto, California. During manufacture of a laminated window according to the invention, a piece of this material, cut to the size of heating element required, is placed between two plies of PVB, each preferably 0.38 mm thick to minimise the total thickness of material which has to be accommodated between the plies of glazing material. When the window is laminated by autoclaving in known manner, the two plies of interlayer flow and fuse together, so that in the sectional view of Figure 2, the heating element appears to occupy a position partway through the thickness of a single ply of PVB.

Electrical connection means 40 are provided for connecting the heating element to the vehicle electrical supply. For example, one of the plies of PVB may carry busbars for supply of electrical power, and the busbars may comprise thin copper foils or strips, which are connected to the vehicle electrical supply in known fashion by conventional wires and terminals.

The power density at which the heating element is operated should be selected to release sufficient heat to melt ice within an acceptable time period, and prevent the formation of condensation during use, while not consuming excessive power or causing damage. Suitable power densities have been found to be in the range 200 - 3000 Wm⁻², preferably 200 - 2500 Wm⁻². If the heating element is to be powered continuously, a power density in the range 400 - 1000 Wm⁻² is preferred so that the maximum temperature attained is not excessive. On the other hand, in some applications a rapid heating response is desired, in which case a power density in the range 1500 - 3000 Wm⁻² may be employed together with, where appropriate, a temperature sensor and switching circuit to avoid dangerously high temperatures being attained. One example of an application where a high power density is desirable is where the heating element is adjacent, as opposed to within, the viewing area.

In this embodiment the path length from one busbar to the other is relatively short, which means that the heating element has a relatively low resistance, and the desired power density is achieved at a relatively low voltage.

Figure 5 shows a second embodiment of heating element in which the path length from one busbar to the other is increased. The heating element 50, which is still based on a piece of coated PET as before, is treated to produce divisions or splits 51 in the conductive layer. Suitable treatment techniques include etching by laser to selectively remove predetermined areas of coating, or mechanical stamping to cut the coating where desired. As such divisions tend to result in increased current densities at the apices of the divisions, producing hot spots, further divisions 52 may be included to alleviate such hot spots.

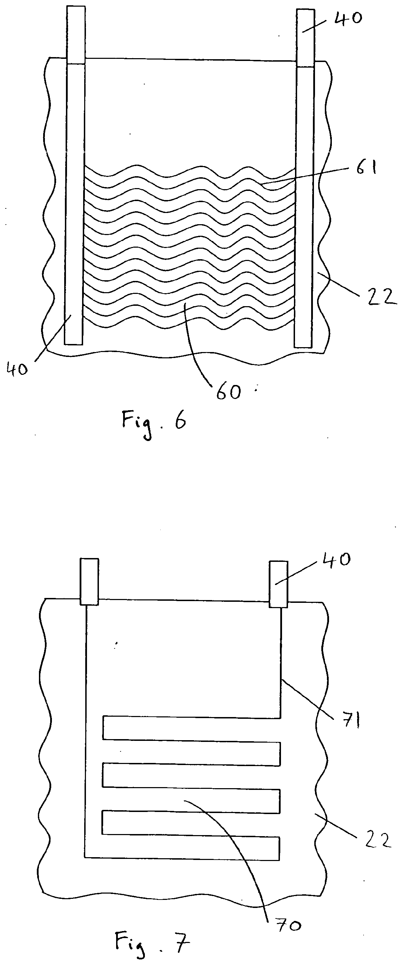

Figure 6 shows a third embodiment of heating element for the viewing area of a window. This heating element 60 employs thin tungsten wires 61 to provide the heating circuit. The wires are typically 15-50 µm thick, and are laid 1.8-3.0 mm apart; they may be crimped (as illustrated) to reduce unwanted reflections, or straight. A preferred way of manufacturing such heating elements efficiently is to use the drum machine disclosed in EP-A-788 294. Numerous pieces of PVB are cut to size, and copper strips are laid on them in position to form busbars, held in place by local application of heat, e.g. from a soldering iron. The pieces of PVB are then placed side-by-side on the drum, and all wired in one operation. When wiring is complete, the pieces are separated by cutting the wires between them, and each piece is used as a heating element. The heating element may be placed on top of the full size ply of interlayer material 22, in which case it is preferable for the heating element to be formed on 0.38 mm thick PVB. Alternatively, an appropriately sized aperture may be cut in the full size interlayer ply, and the heating element inserted in the aperture, so that it replaces the piece of interlayer material which was removed. An alternative technique for providing busbars is to print them using conductive silver ink. The busbars may be printed on one of the faces of the glass plies which faces the interlayer after assembly, and the heating element may then be placed in direct contact with the glass ply so that the heating element makes electrical contact with the printed busbars.

Figure 7 shows a fourth embodiment of heating element, which again employs wires, but of a ductile metal such as copper, and the wires are arranged in boustrophedon manner. This heating element 70 comprises a single copper wire 71, which may be 0.08-0.2 mm in diameter, and extends along a switchback path comprising a series of 90° bends arranged to produce a square wave pattern. Alternatively, a serpentine pattern comprising a series of radiused 180° "hairpin" bends would be satisfactory. The spacing between adjacent portions of the wire may be 5-10 mm. Such a wire pattern is best laid with the PVB placed on a flat table, using a programmable robotic apparatus of the type used to deposit antenna wires. Prior to laminating, the wire may be held in position by application of a PVB solution, or use of heat.

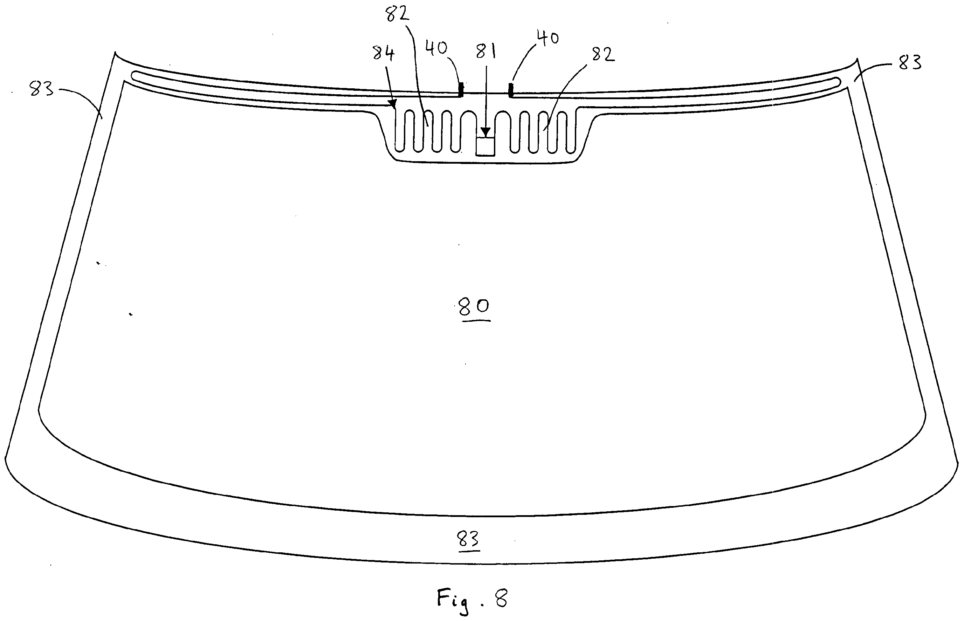

Figure 8 shows an alternative version of the invention, in which the window includes an additional electrical resistance. As has already been mentioned, some of the embodiments of heating element described above have relatively low resistances, and develop the desired power density on application of a relatively low voltage. It would be convenient for the electrically heated window to be connected to the same supply voltage as other components in the same vehicle, i.e. without having to modify the supply voltage for the window. According to this version of the invention, an additional electrical resistance is provided on or in the window and connected in series with the heating element, the value of the additional electrical resistance being selected to be complementary to the resistance of the heating element, so that application of the supply voltage across the total resistance results in a desired level of power density in the heating element.

In Figure 8, an electrically heated window 80 is shown, which is provided with a localised area 81 heated by a heating element as before. However, whereas in the earlier version of the invention the electrical connection means led directly from the heating element to the edge of the window, and then passed outside the window to allow connection to be made, in this version an additional resistance 82 is connected in series with the heating element on each side of the element. The window has an obscuration band 83, and it is aesthetically preferable if the additional resistances are concealed from view by the obscuration band. Accordingly, the additional resistances may take the form of a convoluted line 84 printed in silver ink on the obscuration band, or a similarly convoluted wire laid on a ply which is on the interior side of the obscuration band, and hence concealed by it. In this version, the electrical connection means 40 are connected to the ends of the additional resistances, rather than directly to the heating element itself.

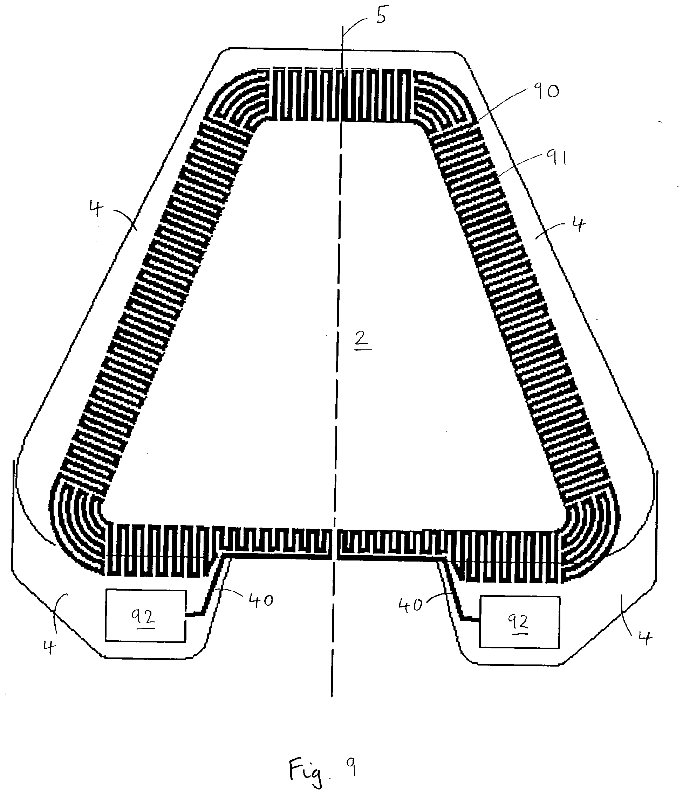

Figure 9 shows a fifth embodiment of heating element 90 which is printed onto one of the plies or sheets of glazing material, adjacent the viewing area 2. The element may be provided on an internal face, i.e. a face which is adjacent the interlayer in the assembled laminate, or on an exposed face. The heating element comprises one or more conductive lines 91 which may be printed in a conductive ink or enamel. Preferably the ink contains silver, and preferably the glazing material is glass, in which case the ink may be frit-based so that it may be fired onto the glass in known manner. Further preferably, the ink is screen-printed, allowing great flexibility in the pattern of lines applied to the glazing material. A preferred pattern is the boustrophedon pattern shown, in which a conductive line comprises alternate U-shaped bends interspersed with straight or moderately curved segments, so that the line progresses in alternately left to right then right to left directions. This pattern allows high heat generation within a compact area, so that sufficient heat is generated for the whole of the viewing area 2 to be heated by thermal conduction from the element.

The heating element is shown provided with connector pads 92 for connection of the electrical supply, e.g. by soldered terminals or pressure contacts, when the element is on an exposed face. Alternatively, when the element is provided on an internal face of a laminate, the connector pads may be omitted and the electrical connection means 40 comprising a printed conductive track may be extended to join or form a busbar, normally also printed and positioned adjacent the edge of the window.

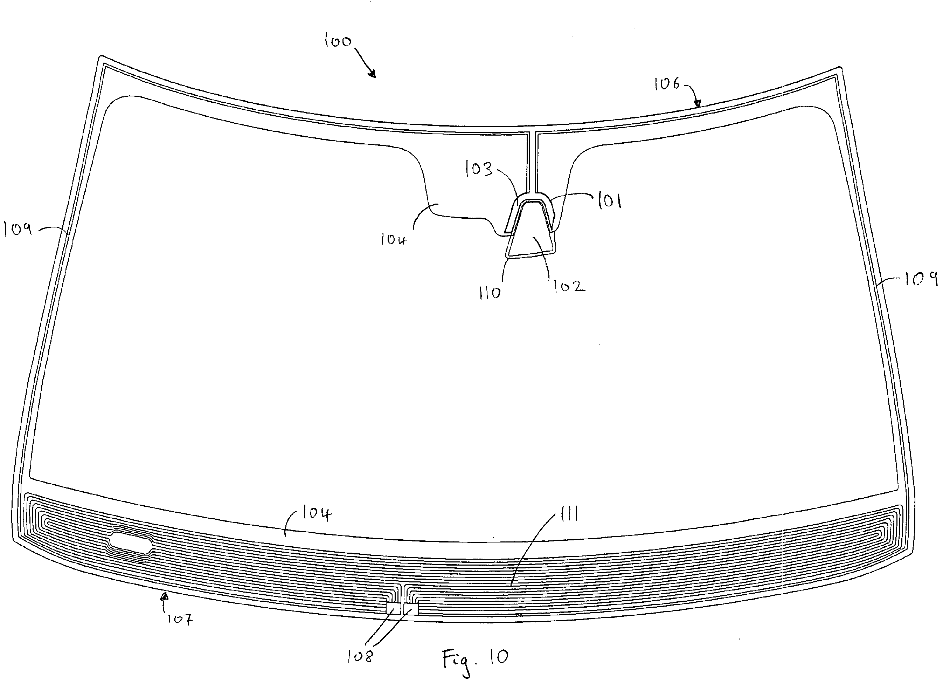

Figure 10 shows a windscreen 100 having both a heated localised area 103 including part of a viewing area 102 for an imaging device and a heated wiper rest area 111. The localised area is heated by a resistance heating element 101 in the form of one or more screen printed lines of conductive ink. As in the case of the window shown in Fig. 1, there is a substantially opaque coating 104 forming an obscuration band. The window has an upper edge 106 and a lower edge 107. The heated viewing area 102 and heated wiper rest area 111 share common electrical connection points 108 adjacent lower edge 107; the heated viewing area 102 is supplied with electrical power by electrical connection means in the form of extended conductors or busbars 109. The viewing area 102 is delimited by an area 110 which represents the contact area of a housing for an imaging device such as a camera when affixed to the windscreen.

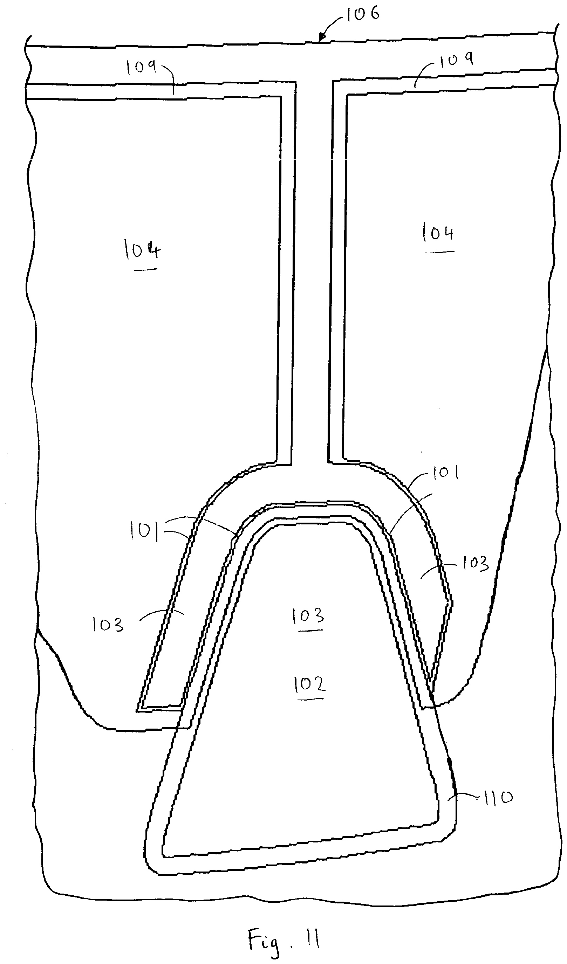

Figure 11 is an enlargement of the heated viewing area 102 of Figure 10 and the surrounding part of the windscreen, showing more clearly the heating element 101 which forms part of the heating circuit for heating the viewing area.

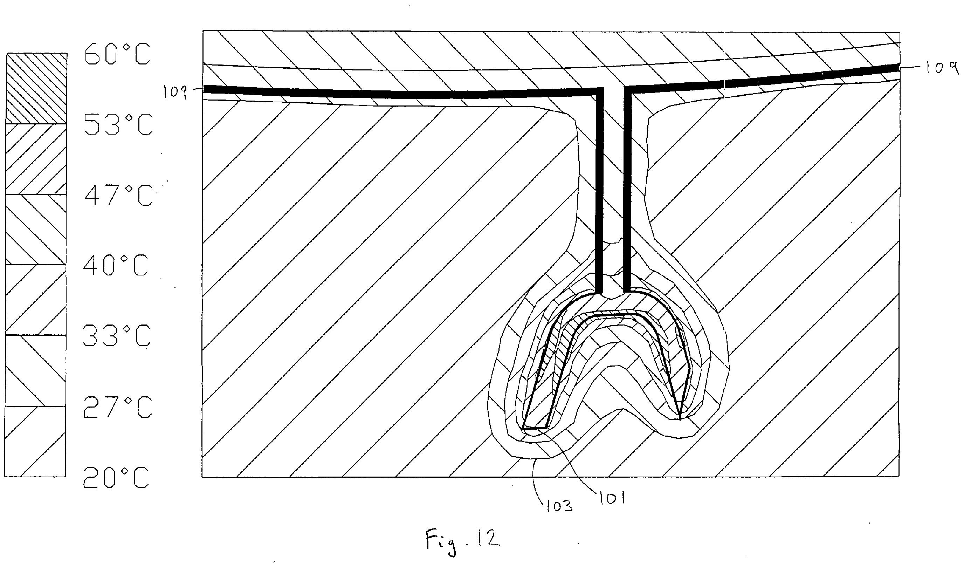

Figure 12 shows part of the busbars 109 and the heating element 101 together with thermal contours calculated in a thermal simulation of steady state operation of the heating circuit. The simulation assumed an applied voltage of 12V and an ambient temperature of 20°C. Using a busbar width of 4mm and a conductive line width of 1.27mm together with a silver ink resistance of 3.5 milliohms per square resulted in a circuit resistance of 4.4 ohms and an average power density of 2000 Wm⁻² . The thermal contours reveal the actual area heated in practice by the circuit, which is sufficient to dispel condensation, frost, snow and ice from the viewing area.

## Claims

1. An electrically heated window (1, 80, 100) laminated from at least two plies (20, 21) of glazing material and at least one ply of interlayer material (22) extending between the plies of glazing material, the window (1, 80, 100) further comprising a resistance heating element (23, 50, 60, 70, 90, 101) suitable for heating a localised area of the window (1, 80, 100) and electrical connection means (40, 109) for connecting the heating element (23, 50, 60, 70, 90, 101) to an electrical supply, wherein the heating element (23, 50, 60, 70, 90, 101) is laminated between the plies (20, 21) of glazing material **characterised by** an imaging device (30) which is configured to view an object to be imaged through a viewing area (2, 102) of the window (1, 80, 100), wherein the heating element (23, 50, 60, 70, 90, 101) is suitable for heating also the viewing area (2, 102) and is positioned adjacent the viewing area (2, 102) so as not to affect the image viewed .

2. An electrically heated vehicle window (80, 100) comprising either a single ply of glazing material or multiple plies (20, 21) of glazing material laminated together, the window (80, 100) further comprising a resistance heating element (90, 101) suitable for heating a localised area of the window (80, 100) and an electrical connection means (40, 109) for connecting the heating element (90, 101) to an electrical supply, wherein the heating element (90, 101) is printed in conductive ink on the surface of a ply of glazing material **characterised by** an imaging device (30) which is configured to view an object to be imaged through a viewing area (2, 102) of the window (80, 100), wherein the heating element (90, 101) is suitable for heating also the viewing area (2, 102) and is positioned adjacent the viewing area (2, 102) so as not to affect the image viewed.

3. A window as claimed in any preceding claim, wherein the window (1, 80, 100) is provided with a substantially opaque coating (4, 83, 104) disposed on a face of at least one of the plies, and the substantially opaque coating (4, 83, 104) extends over the edges of the heating element (23, 50, 60, 70, 90, 101) so as to obscure them from view.

4. A window as claimed in any preceding claim, wherein the window (1, 80, 100) is a vehicle windscreen having mirror symmetry about a centre line (5), and the viewing area (2, 102) is positioned on the centre line, near the upper edge of the windscreen.

5. A window as claimed in any preceding claim, wherein the windscreen is provided with a mirror boss (33) for mounting a rear view mirror (31), and the viewing area (2, 102) adjoins the mirror boss.

6. A window as claimed in any preceding claim, wherein the window (1, 80, 100) is provided with a wiper (9), and the viewing area is within the area wiped by the wiper.

7. A window as claimed in any preceding claim, wherein the window (1, 80, 100) includes an additional electrical resistance (82) on or in the window (1, 80, 100) and connected in series with the heating element (23, 50, 60, 70, 90, 101), the value of the additional electrical resistance being selected to be complementary to the resistance of the heating element (23, 50, 60, 70, 90, 101), so that application of the supply voltage across the total resistance results in a desired level of power density in the heating element (23, 50, 60, 70, 90, 101).

8. A window as claimed in any preceding claim, wherein the heating element (23, 50, 60, 70, 90, 101) has a power density in the range 200 - 3000 Wm⁻², preferably 200 - 2500 Wm⁻².

9. A window as claimed in any preceding claim, wherein the window (1, 80, 100) is for a road vehicle, and the imaging device (30) is a camera for viewing the road on which the vehicle is travelling.

10. A window as claimed in any preceding claim, wherein the localised area comprises less than 10% of the total area of the window.

11. A window as claimed in any preceding claim, in which the heating element (23, 50, 60, 70, 90, 101) comprises conductive wires (61, 71) or lines (84, 91) arranged in boustrophedon manner.

12. A method of manufacturing the electrically heated window (1, 80, 100) of claim 1, comprising providing the heating element (23, 50, 60, 70, 90, 101) and the electrical connection means (40, 92) at the appropriate position between the plies (20, 21) of glazing material; laminating the plies (20, 21) of glazing material and the ply of interlayer material (22) together to form a laminated window (1, 80, 100) and mounting an imaging device (30) on a face of the window (1, 80, 100).

13. A method as claimed in claim 12, comprising placing the heating element (23, 50, 60, 70, 90, 101) between two plies of interlayer material (22).

14. A method as claimed in claim 12 or claim 13, comprising assembling the heating element (23, 50, 60, 70, 90, 101) on a piece of interlayer material (22), cutting out a corresponding piece of interlayer material from the ply of interlayer material (22) and replacing it with the piece carrying the heating element.

## Patentansprüche

1. Elektrisch beheizbares Fenster (1, 80, 100), das aus mindestens zwei Lagen (20, 21) aus Verglasungsmaterial und mindestens einer Lage aus Zwischenschichtmaterial (22) laminiert ist, die sich zwischen den Lagen aus Verglasungsmaterial erstreckt, wobei das Fenster (1, 80, 100) weiterhin ein Widerstandsheizelement (23, 50, 60, 70, 90, 101), das für das Aufheizen einer lokalisierten Fläche des Fensters (1, 80, 100) geeignet ist, und elektrische Verbindermittel (40, 92) zum Verbinden des Heizelements (23, 50, 60, 70) mit einer Stromversorgung umfasst, wobei das Heizelement (23, 50, 60, 70, 90, 101) zwischen den Lagen (20, 21) aus Verglasungsmaterial laminiert ist, **gekennzeichnet durch** eine Bildgebungseinrichtung (30), die dafür gestaltet ist, einen abzubildenden Gegenstand durch ein Sichtfeld (2, 102) des Fensters (1, 80 100) zu sehen, wobei da Heizelement (23, 50, 60, 70, 90, 101) dafür geeignet ist, auch das Sichtfeld (2, 102) zu erhitzen, und es benachbart zu dem Sichtfeld (2, 102) angeordnet ist, damit das gesehene Bild nicht beeinträchtigt wird.

2. Elektrisch beheizbares Fahrzeugfenster (80, 100), das eine einzige Lage aus Verglasungsmaterial oder mehrere Lagen (20, 21) aus Verglasungsmaterial, die miteinander laminiert sind, umfasst, wobei das Fenster (80, 100) weiterhin ein Widerstandsheizelement (90, 101), das für das Aufheizen einer lokalisierten Fläche des Fensters geeignet ist, und elektrische Verbindermittel (40, 109) zum Verbinden des Heizelements (90, 101) mit einer Stromversorgung umfasst, wobei das Heizelement (90, 101) in leitfähiger Tinte auf die Oberfläche einer Lage aus Verglasungsmaterial gedruckt ist, **gekennzeichnet durch** eine Bildgebungseinrichtung (30), die dafür gestaltet ist, einen abzubildenden Gegenstand durch ein Sichtfeld (2, 102) des Fensters (80, 100) zu sehen, wobei da Heizelement (90, 101) dafür geeignet ist, auch das Sichtfeld (2, 102) zu erhitzen, und es benachbart zu dem Sichtfeld (2, 102) angeordnet ist, damit das gesehene Bild nicht beeinträchtigt wird.

3. Fenster, das wie in einem vorhergehenden Anspruch beansprucht ist, wobei das Fenster (1, 80, 100) mit einer im Wesentlichen opaken Beschichtung (4, 83, 104) versehen ist, die auf einer Oberfläche von mindestens einer der Lagen angeordnet ist, und sich die im Wesentlichen opake Beschichtung (4, 83, 104) über die Ränder des Heizelements (23, 50, 60, 70, 90, 101) erstreckt, um sie unsichtbar zu machen.

4. Fenster, das wie in einem vorhergehenden Anspruch beansprucht ist, wobei das Fenster (1, 80, 100) eine Fahrzeugwindschutzscheibe ist, die entlang einer Mittellinie (5) spiegelsymmetrisch ist, und das Sichtfeld (2, 102) auf der Mittellinie in der Nähe des oberen Randes der Windschutzscheibe angeordnet ist.

5. Fenster, das wie in einem vorhergehenden Anspruch beansprucht ist, wobei die Windschutzscheibe mit einem Spiegelhalter (33) für die Montage eines Rückspiegels (31) ausgestattet ist und das Sichtfeld (2, 102) an den Spiegelhalter grenzt.

6. Fenster, das wie in einem vorhergehenden Anspruch beansprucht ist, wobei das Fenster (1, 80, 100) mit einem Wischer (9) ausgestattet ist und das Sichtfeld (2, 102) innerhalb der Fläche ist, die von dem Wischer gewischt wird.

7. Fenster, das wie in einem vorhergehenden Anspruch beansprucht ist, wobei das Fenster (1, 80, 100) einen zusätzlichen elektrischen Widerstand (82) auf oder in dem Fenster (1, 80, 100) einschließt, der in Reihe mit dem Heizelement (23, 50, 60, 70, 90, 101) verbunden ist, wobei der Wert des zusätzlichen elektrischen Widerstands so ausgewählt ist, dass er komplementär zu dem Widerstand des Heizelements (23, 50, 60, 70, 90, 101) ist, so dass das Anlegen der Versorgungsspannung über den Gesamtwiderstand zu einer gewünschten Höhe der Stromdichte in dem Heizelement (23, 50, 60, 70, 90, 101) führt.

8. Fenster, das wie in einem vorhergehenden Anspruch beansprucht ist, wobei das Heizelement (23, 50, 60, 70, 90, 101) eine Stromdichte im Bereich von 200 - 3000 Wm⁻², vorzugsweise 200 - 2500 Wm⁻², hat.

9. Fenster, das wie in einem vorhergehenden Anspruch beansprucht ist, wobei das Fenster (1, 80, 100) für ein Straßenfahrzeug vorgesehen ist und die Bildgebungseinrichtung (30) eine Kamera zum Betrachten der Straße ist, auf der das Fahrzeug fährt.

10. Fenster, das wie in einem vorhergehenden Anspruch beansprucht ist, wobei die lokalisierte Fläche weniger als 10 % der Gesamtfläche des Fensters umfasst.

11. Fenster, das wie in einem vorhergehenden Anspruch beansprucht ist, in dem das Heizelement (23, 50, 60, 70, 90, 101) leitfähige Drähte (61, 71) oder Leitungen (84, 91) umfasst, die in Bustrophedon-Weise angeordnet sind.

12. Verfahren zum Herstellen des elektrisch beheizbaren Fensters (1, 80, 100) von Anspruch 1, das das Bereitstellen des Heizelements (23, 50, 60, 70, 90, 101) und der elektrischen Verbindermittel (40, 92) an der geeigneten Position zwischen den Lagen (20, 21) aus Verglasungsmaterial; das Laminieren der Lagen (20, 21) aus Verglasungsmaterial und der Lage aus Zwischenschichtmaterial (22) miteinander unter Bildung eines laminierten Fensters (1, 80, 100) und das Montieren einer Bildgebungseinrichtung (30) auf einer Oberfläche des Fensters (1, 80, 100) umfasst.

13. Verfahren, das wie in Anspruch 12 beansprucht ist, das das Anordnen des Heizelements (23, 50, 60, 70, 90, 101) zwischen zwei Lagen aus Zwischenschichtmaterial (22) umfasst.

14. Verfahren, das wie in Anspruch 12 oder Anspruch 13 beansprucht ist, das das Montieren des Heizelements (23, 50, 60, 70, 90, 101) auf einem Stück Zwischenschichtmaterial (22), das Herausschneiden eines entsprechenden Stücks Zwischenschichtmaterial aus der Lage des Zwischenschichtmaterials (22) und sein Ersetzen durch das Stück, das das Heizelement trägt, umfasst.

## Revendications

1. Vitre électriquement chauffée (1, 80, 100) stratifiée à partir d'au moins deux épaisseurs (20, 21) de matériau de vitrage et d'au moins une épaisseur de matériau de couche intermédiaire (22) s'étendant entre les épaisseurs de matériau de vitrage, la vitre (1, 80, 100) comprenant de plus un élément chauffant de résistance (23, 50, 60, 70, 90, 101) approprié pour chauffer une surface localisée de la vitre (1, 80, 100) et un moyen de connecteur électrique (40, 92) pour connecter l'élément chauffant (23, 50, 60, 70, 90, 101) à une alimentation électrique, où l'élément chauffant (23, 50, 60, 70, 90, 101) est stratifié entre les épaisseurs (20, 21) de matériau de vitrage, **caractérisée par** un dispositif d'imagerie (30) qui est configuré pour voir un objet à imager à travers une surface de vue (2, 102) de la vitre (1, 80, 100), où l'élément chauffant (23, 50, 60, 70, 91, 101) est approprié pour chauffer également la surface de vue (2, 102) et est positionné à côté de la surface de vue (2, 102) afin de ne pas affecter l'image vue.

2. Vitre de véhicule électriquement chauffée (80, 100) comprenant soit une seule épaisseur de matériau de vitrage, soit des épaisseurs multiples (20, 21) de matériau de vitrage stratifiées ensemble, la vitre (80, 100) comprenant de plus un élément chauffant de résistance (90, 101) approprié pour chauffer une surface localisée de la vitre et un moyen de connecteur électrique (40, 109) pour connecter l'élément chauffant (90, 101) à une alimentation électrique, où l'élément chauffant (90, 101) est imprimé dans une encre conductrice sur la surface d'une épaisseur de matériau de vitrage, **caractérisée par** un dispositif d'imagerie (30) qui est configuré pour voir un objet à imager à travers une surface de vue (2, 102) de la vitre (80, 100), où l'élément chauffant (90, 101) est approprié pour chauffer également la surface de vue (2, 102) et est positionné à côté de la surface de vue (2, 102) afin de ne pas affecter l'image vue.

3. Vitre selon l'une quelconque des revendications précédentes, où la vitre (1, 80, 100) est munie d'un revêtement pratiquement opaque (4, 83, 104) disposé sur une face d'au moins une des épaisseurs, et le revêtement pratiquement opaque (4, 83, 104) s'étend sur les bords de l'élément chauffant (23, 50, 60, 70, 91, 101) afin de les cacher de la vue.

4. Vitre selon l'une quelconque des revendications précédentes, où la vitre (1, 80, 100) est un parebrise de véhicule ayant une symétrie de miroir autour d'une ligne centrale (5), et la surface de vue (2, 102) est disposée sur la ligne centrale, à proximité du bord supérieur du parebrise.

5. Vitre selon l'une quelconque des revendications précédentes, où le parebrise est muni d'une protubérance de miroir (33) pour monter un rétroviseur (31) et la surface de vue (2, 102) jouxte la protubérance de miroir.

6. Vitre selon l'une quelconque des revendications précédentes, où la vitre (1, 80, 100) est munie d'un essuie-glace (9), et la surface de vue (2, 102) se trouve dans la surface balayée par l'essuie-glace.

7. Vitre selon l'une quelconque des revendications précédentes, où la vitre (1, 80, 100) comprend une résistance électrique supplémentaire (82) sur ou dans la vitre (1, 80, 100) et connectée en série avec l'élément chauffant (23, 50, 60, 70, 90, 101), la valeur de la résistance électrique supplémentaire étant choisie pour être complémentaire à la résistance de l'élément chauffant (23, 50, 60, 70, 90, 101), de sorte qu'une application de la tension d'alimentation à travers la résistance totale résulte en un niveau souhaité de densité énergétique dans l'élément chauffant (23, 50, 60, 70, 90, 101).

8. Vitre selon l'une quelconque des revendications précédentes, où l'élément chauffant (23, 50, 60, 70, 90, 101) présente une densité énergétique dans l'intervalle de 200 - 3 000 Wm⁻², de préférence 200 -2 500 Wm⁻².

9. Vitre selon l'une quelconque des revendications précédentes, où la vitre (1, 80, 100) est destinée à un véhicule de route, et le dispositif d'imagerie (30) est une caméra pour voir la route sur laquelle le véhicule se déplace.

10. Vitre selon l'une quelconque des revendications précédentes, où la surface localisée comprend moins de 10 % de la surface totale de la vitre.

11. Vitre selon l'une quelconque des revendications précédentes, dans laquelle l'élément chauffant (23, 50, 60, 70, 90, 101) comprend des câbles (61, 71) ou lignes (84, 91) conducteurs disposés dans une manière de boustrophédon.

12. Procédé de fabrication de la vitre électriquement chauffée (1, 80, 100) selon la revendication 1, comprenant la fourniture de l'élément chauffant (23, 50, 60, 70, 90, 101) et du moyen de connecteur électrique (40, 92) à la position appropriée entre les épaisseurs (20, 21) de matériau de vitrage ; la stratification des épaisseurs (20, 21) de matériau de vitrage et de l'épaisseur de matériau de couche intermédiaire (22) ensemble pour former une vitre stratifiée (1, 80, 100) et le montage d'un dispositif d'imagerie (30) sur une face de la vitre (1, 80, 100).

13. Procédé selon la revendication 12, comprenant le placement de l'élément chauffant (23, 50, 60, 70, 90, 101) entre deux épaisseurs de matériau de couche intermédiaire (22).

14. Procédé selon la revendication 12 ou la revendication 13, comprenant l'assemblage de l'élément chauffant (23, 50, 60, 70, 90, 101) sur une pièce de matériau de couche intermédiaire (22), la découpe d'une pièce correspondante de matériau de couche intermédiaire de l'épaisseur de matériau de couche intermédiaire (22) et le remplacement de celle-ci avec la pièce supportant l'élément chauffant.
